# EUROPÄISCHE PATENTSCHRIFT

(11) **EP 4 087 085 B1**
(45) Veröffentlichungstag und Bekanntmachung des Hinweises auf die Patenterteilung: **03.07.2024**
(21) Anmeldenummer: 22167819.6
(22) Anmeldetag: 12.04.2022
(51) Int. Cl.: H02J 7/00

(54) **SPANNUNGSVERSORGUNGSVORRICHTUNG UND SPANNUNGSVERSORGUNGSANORDNUNG MIT EINER SOLCHEN SPANNUNGSVERSORGUNGSVORRICHTUNG**
VOLTAGE SUPPLY DEVICE AND VOLTAGE SUPPLY ASSEMBLY COMPRISING SUCH A VOLTAGE SUPPLY DEVICE
DISPOSITIF D'ALIMENTATION EN TENSION ET AGENCEMENT D'ALIMENTATION EN TENSION DOTÉ D'UN TEL DISPOSITIF D'ALIMENTATION EN TENSION

(30) Priorität: 05.05.2021 DE 102021204531
(43) Veröffentlichungstag der Anmeldung: 09.11.2022
(73) Patentinhaber: Continental Automotive Technologies GmbH, 30175 Hannover (DE)
(72) Erfinder: Hemmat-Esfandabadi, Riaz, 81737 München (DE)
(74) Vertreter: Continental Corporation

(56) Entgegenhaltungen:
- CN-A- 108 767 974
- US-A1- 2021 119 274
- Anonymous: "BQ298xyz Voltage, Current, Temperature Protectors with an Integrated High-Side NFET Driver for Fast/Flash Charging Single-Cell Li-Ion and Li-Polymer Batteries", Texas instruments, 1. Januar 2020 (2020-01-01), Seiten 1-27, XP055916837, Gefunden im Internet: URL:https://pdf1.alldatasheet.com/datashee t-pdf/view/1271756/TI/BQ2980XY.html [gefunden am 2022-05-02]
- Anonymous: "S-82B1 B Series - Battery protection IC with power -saving function for 1- cell pack", ABLIC, 1. Januar 2017 (2017-01-01), Seiten 1-36, XP055916838, Gefunden im Internet: URL:https://pdf1.alldatasheet.com/datashee t-pdf/view/1173110/ABLIC/S-82B1B.html [gefunden am 2022-05-02]

## Beschreibung

Die Erfindung betrifft eine Spannungsversorgungsanordnung mit einer Spannungsversorgungsvorrichtung mit einem ersten Versorgungsanschluss für ein hohes Spannungspotential und mit einem zweiten Versorgungsanschluss für ein niederes Spannungspotential und mit einem Ladesteueranschluss zum Steuern der Ladefähigkeit der mit einer Batterieanordnung mit einem ersten Batterieanschluss für ein hohes Spannungspotential und mit einem zweiten Batterieanschluss für ein niederes Spannungspotential, die mit zumindest einer wiederaufladbaren Batterie gebildet ist, mit einer Schaltelementanordnung mit einem ersten steuerbaren Schaltelement und einem zweiten steuerbaren Schaltelement, die in Serie geschaltet sind, mit einem integrierten Schaltkreis, der zumindest einen ersten Versorgungsspannungsanschluss für ein hohes Versorgungsspannungspotential, einen zweiten Versorgungsspannungsanschluss für ein niederes Versorgungsspannungspotential, einen ersten Steuersignalausgang zum Ansteuern des ersten steuerbaren Schaltelements, einen zweiten Steuersignalausgang zum Ansteuern des zweiten steuerbaren Schaltelements und einen Abschaltanschluss zum Deaktivieren des ersten und des zweiten Steuersignalausgangs aufweist, wobei der erste Batterieanschluss mit dem ersten Versorgungsspannungsanschluss und mit dem ersten Versorgungsanschluss verbunden ist, wobei der zweite Batterieanschluss mit dem zweiten Versorgungsanschluss und dem zweiten Versorgungsspannungsanschluss verbunden ist, wobei entweder der erste Batterieanschluss über die Schaltelementanordnung mit dem ersten Versorgungsanschluss oder der zweite Batterieanschluss über die Schaltelementanordnung mit dem zweiten Versorgungsanschluss verbunden ist, wobei der erste Steuersignalausgang mit dem ersten Schaltelement und der zweite Steuersignalausgang mit dem zweiten Schaltelement verbunden ist, und wobei der Abschaltanschluss mit dem Ladesteueranschluss verbunden ist wobei der Abschaltanschluss über einen internen Pull-Up-Widerstand mit dem ersten Versorgungsspannungsanschluss verbunden werden kann,

Zwischen den beiden Versorgungsanschlüssen liegt als Differenz des hohen und des niederen Spannungspotentials die Ausgangsspannung der Spannungsversorgungsvorrichtung an.

Eine solche Spannungsversorgungsvorrichtung ist aus dem Datenblatt des integrierten Bausteins BQ298xyz "Voltage, Current, Temperature Protectors with an Integrated High-Side NFET Driver for Fast/Flash Charging Single-Cell Li-Ion and Li-Polymer Batteries" von Texas Instruments oder auch aus dem Datenblatt des integrierten Bausteins S-82B1B "Battery Protection IC with Power-Saving Function for 1-Cell Pack" von ABLIC bekannt.

Dort ist jeweils beschrieben, dass zwar durch einen High-Pegel am Abschaltanschluss der integrierte Baustein in einen Zustand versetzt werden kann, in dem durch entsprechende Ansteuerung des ersten steuerbaren Schaltelements und des zweiten steuerbaren Schaltelements diese in einem nicht-leitenden Zustand sind und somit verhindert wird, dass die Batteriespannung an den Versorgungsanschlüssen der Spannungsversorgungsvorrichtung anliegt, wodurch sich die Batterie ungewollt, beispielsweise bei einem Transport der Batterie oder des Endproduktes, in dem sich die Batterie befindet, entladen könnte. Allerdings muss dieser High-Pegel aktiv durch ein entsprechendes Signal am Abschaltanschluss beispielsweise durch einen Mikroprozessor oder eine andere Schaltung zugeführt werden, wodurch die Spannungsversorgungsvorrichtung andauernd mit dem Mikroprozessor verbunden sein muss, um in diesem Zustand zu bleiben.

Die US 2021/119274 A1 offenbart eine sekundäre Batterieschutzschaltung zur Steuerung der Ladung und Entladung unter Verwendung einer Schaltschaltung zum Schutz einer Sekundärbatterie vor der Temperatur. Der Schaltkreis ist so konfiguriert, dass er in einem Lade- und Entladepfad zwischen der Sekundärbatterie und einem externen Gerät bereitgestellt wird. Die sekundäre Batterieschutzschaltung umfasst eine Detektionsklemme, die so konfiguriert ist, dass sie über einen Widerstand elektrisch mit dem Schaltkreis und dem externen Gerät verbunden ist. Die sekundäre Batterieschutzschaltung umfasst einen ersten Anschluss, der so konfiguriert ist, dass er elektrisch mit einem Temperaturerkennungsterminal des externen Geräts verbunden ist. Die Schutzschaltung der Sekundärbatterie umfasst einen zweiten Anschluss, an den ein temperaturempfindliches Element angeschlossen ist, das so konfiguriert ist, dass es elektrisch verbunden ist, wobei das temperaturempfindliche Element einen charakteristischen Wert aufweist, der sich in Abhängigkeit von einer Temperaturänderung der Sekundärbatterie ändert.

Die CN 108 767 974 A offenbart eine automatische Leistungsschaltung mit einer Batterieunterspannungsabschaltung, einschließlich einer externen Stromversorgungseingangsklemme, einer externen Leistungserkennungsausgangssteuerschaltung, einer Stromversorgungseingangsklemme, einer Batterieniederspannungserkennungsausgangssteuerschaltung und einer Batteriestromversorgung. Der Ein-/Aus-Steuerkreis und das Lastausgangsende sind elektrisch mit dem externen Leistungserkennungsausgangssteuerkreis verbunden, und das externe Stromversorgungseingangsende ist über eine Schottky-Diode mit dem Lastausgang verbunden, und die Eingangsklemme für die Batteriestromversorgung und die jeweilige Steuerschaltung für die Batteriestromversorgung sind elektrisch verbunden. Die Ausgangssteuerschaltung für die Spannungsniederspannungserkennung und die Steuerschaltung für den externen Leistungserfassungsausgang sind jeweils elektrisch mit der Ein-/Ausschaltschaltung der Batteriestromversorgung verbunden, und die Steuerschaltung für die Batteriestromversorgung ist an die Last angeschlossen. Die CN 108 767 974 A offenbart dabei eine Pull-Down-Schaltung mit einem npn-Transistor, dessen erster Lastanschluss mit einem anzusteuerndem Schalter und dessen zweiter Lastanschluss mit einem Bezugspotential verbunden ist und dessen Steueranschluss über einen Widerstand und einen diesem parallel geschalteten Kondensator mit dem Bezugspotential verbunden ist.

Es ist daher die Aufgabe der Erfindung, eine solche Entladung auch ohne aktive und andauernde Ansteuerung des Abschaltanschlusses von außerhalb der Spannungsversorgungsvorrichtung zu verhindern.

Die Aufgabe wird durch eine Spannungsversorgungsanordnung mit den Merkmalen des Anspruchs 1 gelöst. Vorteilhafte Ausgestaltungen und Weiterbildungen sind in den Unteransprüchen angegeben.

Demnach ist bei einer gattungsgemäßen Spannungsversorgungsanordnung der Abschaltanschluss der Spannungsversorgungsvorrichtung über einen Deaktivierwiderstand mit dem ersten Batterieanschluss verbunden. Sie ist außerdem mit einem Mikrocontroller gebildet, der einen Steuerausgang aufweist, der über einen ersten Widerstand mit einem Steueranschluss eines dritten Schaltelements verbunden ist, dessen erster Lastanschluss mit dem Ladesteueranschluss (SD) und dessen zweiter Lastanschluss mit einem Bezugspotential (GND) verbunden ist und dessen Steueranschluss über einen zweiten Widerstand und einen diesem parallel geschalteten Kondensator mit dem Bezugspotential verbunden ist.

Hierdurch wird in vorteilhafter Weise bei einer nicht aktiven Ansteuerung des Abschaltanschlusses des integrierten Bausteins oder des mit diesem verbundenen Ladesteueranschlusses der Spannungsversorgungsvorrichtung der Abschaltanschluss auf das hohe Potential der Batterie gezogen und der integrierte Baustein damit in den gewünschten Zustand versetzt. Erst durch aktive Ansteuerung des Abschaltanschlusses mit einem Low-Pegel werden beide Batterieanschlüsse mit den Versorgungsanschlüssen der Spannungsversorgungsvorrichtung verbunden.

In dieser Ausbildung ist die Ansteuerschaltung für den Abschaltanschluss nicht Bestandteil der Spannungsversorgungsvorrichtung, sondern zusammen mit einem Mikrocontroller Teil einer Spannungsversorgungsanordnung.

In einer vorteilhaften Ausbildung der Spannungsversorgungsvorrichtung ist das dritte steuerbare Schaltelement ein npn-Bipolartransistor.

In einer Ausbildung der Spannungsversorgungsanordnung kann ein Versorgungsspannungsanschluss des Mikrocontrollers über eine Energietransferschaltung mit dem ersten Versorgungsanschluss und mit dem zweiten Versorgungsanschluss der Spannungsversorgungsvorrichtung verbunden sein.

Die Energietransferschaltung kann dabei beispielsweise ein Ladegerät oder ein DC-DC-Wandler sein und kann über einen Anschluss für eine externe Energiequelle verfügen.

In einer Ausbildung einer Spannungsversorgungsvorrichtung kann der erste Batterieanschluss über eine Tiefpassschaltung mit dem ersten Versorgungsspannungsanschluss verbunden sein.

Die Erfindung wird nachfolgend anhand von Ausführungsbeispielen mit Hilfe von Figuren näher erläutert. Dabei zeigen
- Fig. 1: eine erste Ausführung einer Spannungsversorgungsvorrichtung mit einem BQ298xyz Baustein,
- Fig. 2: ein Beispiel einer Ansteuerschaltung für den Abschaltanschluss des integrierten Bausteins, und
- Fig. 3: eine zweite Ausführung einer Spannungsversorgungsvorrichtung mit einem BQ298xyz Baustein mit in die Spannungsversorgungsvorrichtung integrierter Ansteuerschaltung für den Abschaltanschluss des integrierten Bausteins.

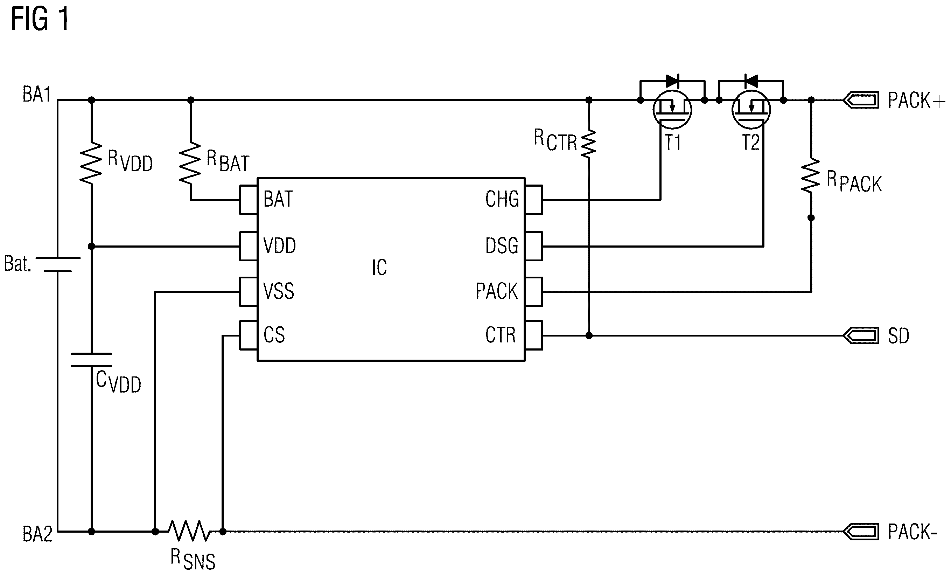

Die Figur 1 zeigt eine Batterieanordnung Bat, die einen ersten Batterieanschluss BA1 für ein hohes Spannungspotential und einen zweiten Batterieanschluss BA2 für ein niederes Spannungspotential hat. Die Batterieanschluss Bat kann dabei mit einer oder auch mit mehrerer wiederaufladbaren Zellen gebildet sein.

Die Batterieanordnung Bat ist Teil einer Spannungsversorgungsvorrichtung, die einen ersten Versorgungsanschluss PACK+ für ein hohes Spannungspotential und einen zweiten Versorgungsanschluss PACK- für ein niederes Spannungspotential sowie einen Ladesteueranschluss SD zum Steuern der Ladefähigkeit der Spannungsversorgungsvorrichtung aufweist.

Im dargestellten Ausführungsbeispiel der Figur 1 ist der erste Batterieanschluss BA1 über eine Schaltelementanordnung, die mit einem ersten steuerbaren Schaltelement T1 und einem zweiten steuerbaren Schaltelement T2 gebildet ist, mit dem ersten Versorgungsanschluss PACK+ verbunden. Das erste Schaltelement T1 und das zweite Schaltelement T2 sind als MOS-Feldeffekttransistoren ausgebildet, die jeweils eine Substratdiode aufweisen. Die beiden Schaltelemente T1, T2 sind in umgekehrter Polung zueinander in Serie geschaltet, so dass über die Substratdioden in keiner Richtung ein Strom fließen kann.

Das erste und das zweite Schaltelement T1, T2 werden von einem integrierten Schaltkreis IC - im dargestellten Beispiel ein oben genannter BQ298xyz - angesteuert, wozu ein erster Steuersignalausgang CHG des integrierten Schaltkreises IC mit dem Steueranschluss des ersten Schaltelements T1 und ein zweiter Steuersignalausgang DSG mit dem Steueranschluss des zweiten Schaltelements T2 verbunden ist. Über diese Steuersignalausgänge CHG, DSG können die beiden Schaltelemente T1, T2 vom integrierten Schaltkreis IC aktiviert oder deaktiviert, also leitend oder nicht-leitend geschaltet werden.

Der integrierte Schaltkreis IC weist des Weiteren zwei Versorgungsanschlüsse VDD und VSS auf, die jeweils mit dem ersten Batterieanschluss BA1 bzw. dem zweiten Batterieanschluss BA2 verbunden sind. Dabei ist im dargestellten Ausführungsbeispiel der Figur 1 der erste Versorgungsspannungsanschluss VDD des integrierten Schaltkreises IC über einen Tiefpass R_{VDD}, C_{VDD} mit den Anschlüssen BA1, BA2 der Batterieanordnung Bat verbunden.

Der integrierte Schaltkreis IC weist des Weiteren einen Anschlusspin CS auf, der mit dem zweiten Versorgungsanschluss PACK- der Spannungsversorgungsvorrichtung und über einen Widerstand R_{SNS} mit dem zweiten Batterieanschluss BA2 verbunden ist. Außerdem ist ein Anschluss PACK über einen Widerstand R_{PACK} mit dem ersten Versorgungsanschluss PACK+ verbunden.

Der integrierte Schaltkreis IC weist einen Abschaltanschluss CTR auf, der gemäß dem Datenblatt des integrierten Schaltkreise BQ298xyz bei Anliegen eines High-Pegels über die Steuersignalausgänge CHG, DSG die beiden Schaltelemente T1, T2 nicht-leitend schalten kann. Hierzu muss üblicherweise durch Anlegen eines entsprechenden Signals dieses Deaktivieren der Schaltelemente T1, T2 bewerkstelligt werden.

Der Abschaltanschluss CTR ist über einen Deaktivierwiderstand R_{CTR} mit dem ersten Batterieanschluss BA1 verbunden, so dass ohne eine Ansteuerung des mit dem Abschaltanschluss CTR verbundenen Ladesteueranschlusses SD der integrierte Schaltkreis IC die Schaltelemente T1, T2 deaktiviert, so dass bei einem Trennen der Spannungsversorgungsvorrichtung von einer mit elektrischer Energie zu versorgenden Schaltung die Versorgungsanschluss PACK+ und PACK- nicht an der Spannung der Batterieanordnung Bat anliegen und sich die Batterieanordnung Bat somit nicht über einen hier evtl. entstehenden leitenden Pfad entladen kann.

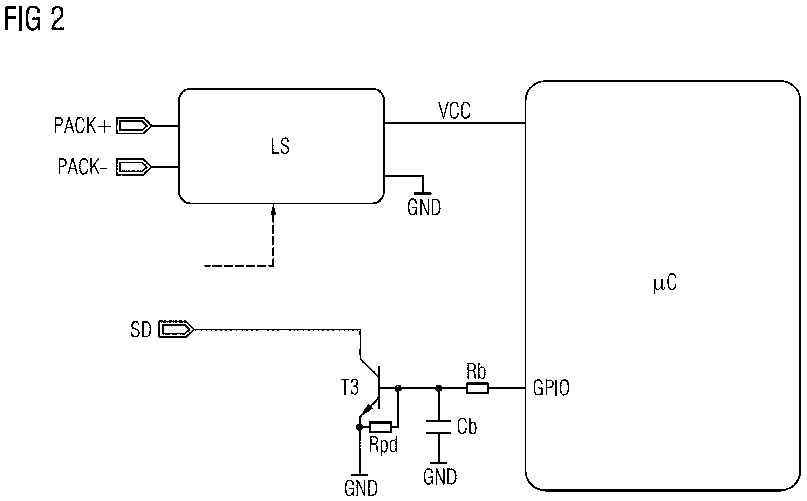

Zum Leitendschalten der Schaltelemente T1, T2 ist es nun erforderlich, an den Ladesteueranschluss SD aktiv einen Low-Pegel anzulegen. Dies kann in vorteilhafter Weise über eine Steuereinrichtung mittels einer in der Figur 2 dargestellten Transistorschaltung erfolgen. Die Steuereinrichtung ist in der Figur 2 als Mikrocontroller µC dargestellt, kann jedoch auch eine beliebig andere Steuereinrichtung sein. Der Mikrocontroller µC wird dabei von einer Ladeschaltung LS mit Versorgungsspannung VCC versorgt, wobei diese Ladeschaltung einerseits mit den Versorgungsanschlüssen PACK+ und PACK- der Spannungsversorgungsvorrichtung verbunden werden kann und andererseits einen Eingang für eine externe Spannungsversorgung für den Vorgang der Aktivierung der Spannungsversorgungsvorrichtung über den Ladesteueranschluss SD gesteuert durch den Mikrocontroller µC aufweist.

Die Transistorschaltung ist im dargestellten Beispiel der Figur 2 mit einem dritten Transistor T3, der als npn-Bipolartransistor ausgebildet ist und einem Tiefpass aus einem ersten Widerstand Rb und einem Kondensator Cb und an diesem Kondensator Cb parallel geschalteten zweiten Widerstand Rpd gebildet. Die Basis des als Bipolartransistor ausgebildeten dritten Widerstands T3 ist über den ersten Widerstand Rb mit einem Steuerausgang GPIO des Mikrocontrollers µC verbunden. Bei Anlegen eines High-Pegels an diesem Ausgang GPIO des Mikrocontrollers µC schaltet der dritte Transistor T3 durch, wodurch der Ladesteueranschluss SD auf Massepotential GND gezogen wird und damit der integrierte Schaltkreis IC in einen Zustand versetzt wird, in dem über die Steuersignalausgänge CHG, DSG die Schaltelemente T1, T2 in den leitenden Zustand versetzt werden, so dass nun die Ladeschaltung LS über die Anschlüsse PACK+ und PACK- aus der Batterieanordnung Bat versorgt wird. Wird der Steuerausgang GPIO des Mikrocontrollers µC hochohmig geschaltet, so sperrt der dritte Transistor T3 wieder und der integrierte Baustein IC geht wegen des Deaktivierwiderstands R_{CTR} in der Power Safe Modus.

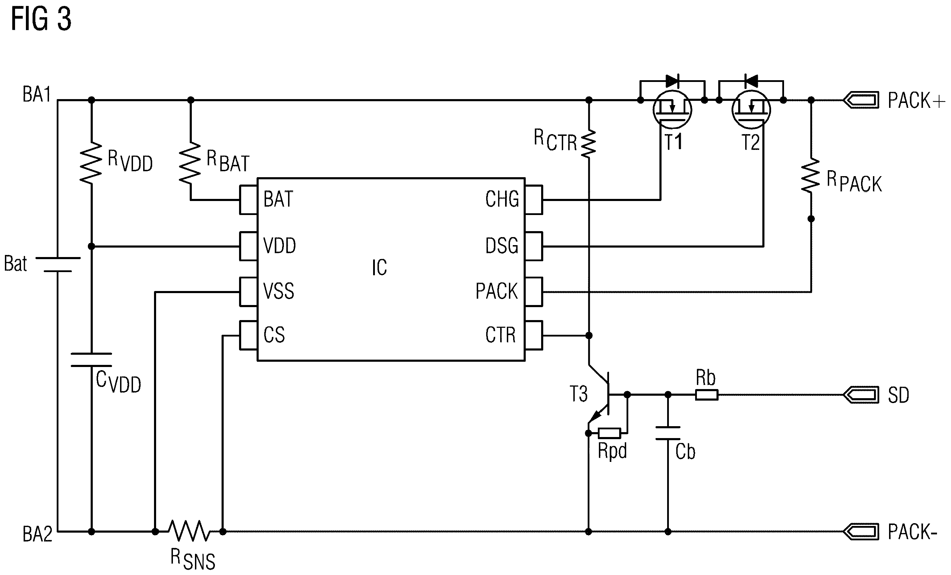

Die Figur 3 zeigt nun eine Spannungsversorgungsanordnung, die einerseits eine Spannungsversorgungvorrichtung gemäß der Figur 1 aufweist und in die die Transistorschaltung gemäß der Figur 2 integriert ist, um vorzugsweise auf einer gemeinsamen Platine, welche als Bestandteil der Spannungsversorgungsanordnung aufgebaut ist, angeordnet ist.

Durch die Spannungsversorgungsanordnung mit der Spannungsversorgungsvorrichtung ergibt sich die Möglichkeit, die Lebensdauer der Batterieanordnung in entsprechenden Geräten (wie z.B. Mobile-Phones und Telematik Geräten) mit wiederaufladbaren Batterieanordnungen (z.B. Lithium-Ionen oder Lithium-Polymer) zu verlängern. Die Spannungsversorgungsvorrichtung kann zur Optimierung des effektiven Widerstandes auf dem Versorgungspfad von der Batterieanordnung zu der versorgten Produkt-Schaltung genutzt werden. Es ergibt sich eine vereinfachte Installation z.B. in einem Fahrzeug. Es ist eine längere Lagerzeit möglich.

Es ist außerdem im Service/Transport-Fall die Deaktivierung des Gerätes ohne Entnahme des Akkus / der Batterieanordnung möglich. Es ist eine extrem niedrige Stromaufnahme des Gerätes im deaktivierten Modus möglich. Die gezielte Abschaltung der Batterieanordnung im Gerät ist möglich (z.B. bei Gefahrgut-Transport).

## Patentansprüche

1. Spannungsversorgungsanordnung mit einer Spannungsversorgungsvorrichtung mit einem ersten Versorgungsanschluss (PACK+) für ein hohes Spannungspotential und mit einem zweiten Versorgungsanschluss (PACK-) für ein niederes Spannungspotential und mit einem Ladesteueranschluss (SD) zum Steuern der Ladefähigkeit der Spannungsversorgungsvorrichtung,
mit einer Batterieanordnung (Bat) mit einem ersten Batterieanschluss (BA1) für ein hohes Spannungspotential und mit einem zweiten Batterieanschluss (BA2) für ein niederes Spannungspotential, die mit zumindest einer wiederaufladbaren Batterie gebildet ist,
mit einer Schaltelementanordnung mit einem ersten steuerbaren Schaltelement (T1) und einem zweiten steuerbaren Schaltelement (T2), die in Serie geschaltet sind,
mit einem integrierten Schaltkreis (IC), der zumindest einen ersten Versorgungsspannungsanschluss (VDD) für ein hohes Versorgungsspannungspotential, einen zweiten Versorgungsspannungsanschluss (VSS) für ein niederes Versorgungsspannungspotential, einen ersten Steuersignalausgang (CHG) zum Ansteuern des ersten steuerbaren Schaltelements (T1), einen zweiten Steuersignalausgang (DSG) zum Ansteuern des zweiten steuerbaren Schaltelements (T2) und einen Abschaltanschluss (CTR) zum Deaktivieren des ersten und des zweiten Steuersignalausgangs (CHG, DSG) aufweist,
wobei der erste Batterieanschluss (BA1) mit dem ersten Versorgungsspannungsanschluss (VDD) und mit dem ersten Versorgungsanschluss (PACK+) verbunden ist,
wobei der zweite Batterieanschluss (BA2) mit dem zweiten Versorgungsspannungsanschluss (VSS) und dem zweiten Versorgungsanschluss (PACK-) verbunden ist,
wobei entweder der erste Batterieanschluss (BA1) über die Schaltelementanordnung mit dem ersten Versorgungsanschluss (PACK+) oder der zweite Batterieanschluss (BA2) über die Schaltelementanordnung mit dem zweiten Versorgungsanschluss (PACK-) verbunden ist,
wobei der erste Steuersignalausgang (CHG; DO) mit dem ersten Schaltelement (T1) und der zweite Steuersignalausgang (DSG) mit dem zweiten Schaltelement (T2) verbunden ist,
wobei der Abschaltanschluss (CTR) mit dem Ladesteueranschluss (SD) verbunden ist,
wobei der Abschaltanschluss (CTR) über einen Deaktivierwiderstand (R_{CTR}) mit dem ersten Batterieanschluss (BA1) verbunden ist,
und mit einem Mikrocontroller (µC), der einen Steuerausgang (GPIO) aufweist, der über einen ersten Widerstand (R_{b}) mit einem Steueranschluss eines dritten Schaltelements (T3) verbunden ist, dessen erster Lastanschluss mit dem Ladesteueranschluss (SD) und dessen zweiter Lastanschluss mit einem Bezugspotential (GND) verbunden ist und dessen Steueranschluss über einen zweiten Widerstand (R_{pd}) und einen diesem parallel geschalteten Kondensator (C_{b}) mit dem Bezugspotential (GND) verbunden ist.

2. Spannungsversorgungsanordnung nach Anspruch 1, **dadurch gekennzeichnet, dass** das dritte steuerbare Schaltelement (T3) ein npn-Bipolartransistor ist.

3. Spannungsversorgungsanordnung nach Anspruch 1 oder 2, **dadurch gekennzeichnet, dass** ein Versorgungsspannungsanschluss des Mikrocontrollers (µC) über eine Energietransferschaltung (LS) mit dem ersten Versorgungsanschluss (PACK+) und mit dem zweiten Versorgungsanschluss (PACK-) der Spannungsversorgungsvorrichtung verbunden ist.

4. Spannungsversorgungsanordnung nach Anspruch 3, **dadurch gekennzeichnet, dass** die Energietransferschaltung (LS) ein Ladegerät oder ein DC-DC-Wandler ist.

5. Spannungsversorgungsanordnung nach einem der vorhergehenden Ansprüche, **dadurch gekennzeichnet, dass** die Energietransferschaltung (LS) einen Anschluss für eine zusätzliche Energiequelle aufweist.

6. Spannungsversorgungsanordnung nach einem der vorhergehenden Ansprüche, **dadurch gekennzeichnet, dass** der erste Batterieanschluss (BA1) über eine Tiefpassschaltung (R_{VDD}, C_{VDD;} R1, C1) mit dem ersten Versorgungsspannungsanschluss (VDD) verbunden ist.

## Claims

1. Voltage supply arrangement having a voltage supply device having a first supply connection (PACK+) for a high voltage potential and having a second supply connection (PACK-) for a low voltage potential and having a charging control connection (SD) for controlling the charging capability of the voltage supply device,
having a battery arrangement (Bat) having a first battery connection (BA1) for a high voltage potential and having a second battery connection (BA2) for a low voltage potential, which battery arrangement is formed by at least one rechargeable battery,
having a switching element arrangement having a first controllable switching element (T1) and a second controllable switching element (T2) which are connected in series,
having an integrated circuit (IC) which has at least a first supply voltage connection (VDD) for a high supply voltage potential, a second supply voltage connection (VSS) for a low supply voltage potential, a first control signal output (CHG) for controlling the first controllable switching element (T1), a second control signal output (DSG) for controlling the second controllable switching element (T2), and a switch-off connection (CTR) for deactivating the first and the second control signal output (CHG, DSG),
wherein the first battery connection (BA1) is connected to the first supply voltage connection (VDD) and to the first supply connection (PACK+),
wherein the second battery connection (BA2) is connected to the second supply voltage connection (VSS) and to the second supply connection (PACK-),
wherein either the first battery connection (BA1) is connected to the first supply connection (PACK+) via the switching element arrangement or the second battery connection (BA2) is connected to the second supply connection (PACK-) via the switching element arrangement,
wherein the first control signal output (CHG; DO) is connected to the first switching element (T1) and the second control signal output (DSG) is connected to the second switching element (T2),
wherein the switch-off connection (CTR) is connected to the charging control connection (SD),
wherein the switch-off connection (CTR) is connected to the first battery connection (BA1) via a deactivating resistor (R_{CTR}),
and having a microcontroller (µC) which has a control output (GPIO) which is connected via a first resistor (R_{b}) to a control connection of a third switching element (T3), the first load connection of which is connected to the charging control connection (SD) and the second load connection of which is connected to a reference potential (GND) and the control connection of which is connected to the reference potential (GND) via a second resistor (R_{pd}) and a capacitor (C_{b}) connected in parallel therewith.

2. Voltage supply arrangement according to Claim 1, **characterized in that** the third controllable switching element (T3) is an npn bipolar transistor.

3. Voltage supply arrangement according to Claim 1 or 2, **characterized in that** a supply voltage connection of the microcontroller (µC) is connected via an energy transfer circuit (LS) to the first supply connection (PACK+) and to the second supply connection (PACK-) of the voltage supply device.

4. Voltage supply arrangement according to Claim 3, **characterized in that** the energy transfer circuit (LS) is a charger or a DC-DC converter.

5. Voltage supply arrangement according to one of the preceding claims, **characterized in that** the energy transfer circuit (LS) has a connection for an additional energy source.

6. Voltage supply arrangement according to one of the preceding claims, **characterized in that** the first battery connection (BA1) is connected to the first supply voltage connection (VDD) via a low-pass circuit (R_{VDD}, C_{VDD}; R1, C1).

## Revendications

1. Arrangement d'alimentation électrique comprenant un dispositif d'alimentation électrique qui comporte une première borne d'alimentation (PACK+) pour un potentiel de tension élevé et une deuxième borne d'alimentation (PACK-) pour un potentiel de tension bas, et une borne de commande de charge (SD) destinée à commander la capacité de charge du dispositif d'alimentation électrique,
comprenant un arrangement de batterie (Bat) qui comporte une première borne de batterie (BA1) pour un potentiel de tension élevé et une deuxième borne de batterie (BA2) pour un potentiel de tension bas, qui et formé avec au moins une batterie rechargeable,
comprenant un arrangement d'éléments de commutation qui comporte un premier élément de commutation (T1) commandable et un deuxième élément de commutation (T2) commandable, qui sont montés en série,
comprenant un circuit intégré (IC), lequel possède au moins une première borne de tension d'alimentation (VDD) pour un potentiel de tension d'alimentation élevé, une deuxième borne de tension d'alimentation (VSS) pour un potentiel de tension d'alimentation bas, une première sortie de signal de commande (CHG) destinée à commander le premier élément de commutation (T1) commandable, une deuxième sortie de signal de commande (DSG) pour commander le deuxième élément de commutation (T2) commandable et une borne de déconnexion (CTR) destinée à désactiver la première et la deuxième sortie de signal de commande (CHG, DSG),
la première borne de batterie (BA1) étant reliée à la première borne de tension d'alimentation (VDD) et à la première borne d'alimentation (PACK+),
la deuxième borne de batterie (BA2) étant reliée à la deuxième borne de tension d'alimentation (VSS) et à la deuxième borne d'alimentation (PACK-),
soit la première borne de batterie (BA1) étant reliée à la première borne d'alimentation (PACK+) par le biais de l'arrangement d'éléments de commutation, soit la deuxième borne de batterie (BA2) étant reliée à la deuxième borne d'alimentation (PACK-) par le biais de l'arrangement d'éléments de commutation, la première sortie de signal de commande (CHG ; DO) étant reliée au premier élément de commutation (T1) et la deuxième sortie de signal de commande (DSG) étant reliée au deuxième élément de commutation (T2),
la borne de déconnexion (CTR) étant reliée à la borne de commande de charge (SD),
la borne de désactivation (CTR) étant reliée à la première borne de batterie (BA1) par le biais d'une résistance de désactivation (R_{CTR}),
et comprenant un microcontrôleur (µC), qui possède une sortie de commande (GPIO), laquelle est reliée par le biais d'une première résistance (R_{b}) à une borne de commande d'un troisième élément de commutation (T3) dont la première borne de charge est reliée à la borne de commande de charge (SD) et dont la deuxième borne de charge est reliée à un potentiel de référence (GND) et dont la borne de commande est reliée au potentiel de référence (GND) par le biais d'une deuxième résistance (R_{pd}) et d'un condensateur (C_{b}) monté en parallèle avec celle-ci.

2. Arrangement d'alimentation électrique selon la revendication 1, **caractérisé en ce que** le troisième élément de commutation (T3) commandable est un transistor bipolaire NPN.

3. Arrangement d'alimentation électrique selon la revendication 1 ou 2, **caractérisé en ce qu'**une borne de tension d'alimentation du microcontrôleur (µC) est reliée à la première borne d'alimentation (PACK+) et à la deuxième borne d'alimentation (PACK-) du dispositif d'alimentation électrique par le biais d'un circuit de transfert d'énergie (LS).

4. Arrangement d'alimentation électrique selon la revendication 3, **caractérisé en ce que** le circuit de transfert d'énergie (LS) est un chargeur ou un convertisseur CC-CC.

5. Arrangement d'alimentation électrique selon l'une des revendications précédentes, **caractérisé en ce que** le circuit de transfert d'énergie (LS) possède une borne pour une source d'énergie supplémentaire.

6. Arrangement d'alimentation électrique selon l'une des revendications précédentes, **caractérisé en ce que** la première borne de batterie (BA1) est reliée à la première borne de tension d'alimentation (VDD) par le biais d'un circuit passe-bas (R_{VDD}, C_{VDD} ; R1, C1).
